# EUROPÄISCHE PATENTANMELDUNG

(11) **EP 1 128 166 A2**
(43) Veröffentlichungstag der Anmeldung: **29.08.2001**
(21) Anmeldenummer: 01103912.0
(22) Anmeldetag: 17.02.2001
(51) Int. Cl.: G01D 13/22

(54) **Anzeigevorrichtung mit einem Zeiger**

(30) Priorität: 23.02.2000 DE 10008211; 06.09.2000 DE 10043950
(71) Anmelder: Mannesmann VDO Aktiengesellschaft, 60388 Frankfurt am Main (DE)
(72) Erfinder: Adams, Jürgen, Dipl.-Ing.(FH), 78052 Villingen-Schwenningen (DE); Neugart, Elmar, Dipl.-Ing.(FH), Meerensee 3901 (ZA); Kolar, Anton, Dipl.-Ing.(FH), 78048 Villingen-Schwenningen (DE)

(57) **Zusammenfassung**

Für eine Anzeigevorrichtung mit einem Zeiger, bei der der Zeiger aus einer drehbaren Zeigerachse 2 und einer an der Zeigerachse 2 radial angeordneten Zeigerfahne 1 besteht, wobei die Zeigerfahne 1 entsprechend einer Drehung der Zeigerachse 2 ausschwenkt, wird vorgeschlagen, daß die Zeigerfahne 1 zusätzlich zu ihrer Schwenkbarkeit infolge der Drehung der Zeigerachse 2 auch um die Achse 13 ihrer radialen Erstreckung drehbar ist und die Zeigerfahne 1 mindestens zwei in ihrem Erscheinungsbild voneinander unterscheidbare Begrenzungsflächen 11a, 11b bzw. 12a, 12b und 12c aufweist.

## Beschreibung

Die Erfindung betrifft eine Anzeigevorrichtung mit einem Zeiger nach dem Oberbegriff des ersten Anspruchs. Bei dieser Anzeigevorrichtung besteht der Zeiger aus einer drehbaren Zeigerachse und einer an der Zeigerachse radial angeordneten Zeigerfahne, wobei die Zeigerfahne entsprechend einer Drehung der Zeigerachse ausschwenkt.

Derartige Anzeigevorrichtungen sind durch vielfältige Benutzung hinlänglich bekannt. Sie finden sich beispielsweise in Anzeigeinstrumenten in Fahrzeugen. Bei diesen Anzeigevorrichtungen ist die Zeigerfahne starr mit der Zeigerachse verbunden. Bei manchen Ausführungen ist die Zeigerfahne als Lichtleiter ausgebildet und kann im Bedarfsfall beleuchtet werden. Es hat sich jedoch herausgestellt, daß eine derart beleuchtete Zeigerfahne bei hellem Umgebungslicht nur einen geringen Kontrast aufweist und infolge dessen in bestimmten Situationen auch nur eine schwache Signalwirkung entfaltet, so daß eine Zeigerfahne dieser Bauart wenig geeignet ist, zusätzlich zu ihrer herkömmlichen Anzeigefunktion die Funktion eines Melders zuverlässig zu übernehmen, selbst wenn man in die als Lichtleiter ausgebildete Zeigerfahne zur Anzeige einer bestimmten Meldung Licht unterschiedlicher Farbe oder Intensität einspeisen würde. Auch sind Ausgestaltungen von gattungsgemäßen Anzeigevorrichtungen mit einer mit einem Farbauftrag versehenen Zeigerfahne bekannt, jedoch geht von einer starr mit der Zeigerachse verbundenen Zeigerfahne mit einer dauerhaften, unveränderbaren farbigen Oberflächengestaltung an sich keine für einen Melder nutzbare Signalwirkung aus.

Es ist nun die Aufgabe der vorliegenden Erfindung, eine gattungsgemäße Anzeigevorrichtung mit einem Zeiger derart weiterzuentwickeln, daß die Zeigerfahne zusätzlich zu ihrer herkömmlichen Anzeigefunktion zuverlässig und mit ausreichender Signalwirkung als Melder nutzbar ist.

Gelöst wird die Aufgabe durch eine Anzeigevorrichtung mit einem Zeiger mit den Merkmalen des ersten Anspruchs, insbesondere dadurch, daß die Zeigerfahne zusätzlich zu ihrer Schwenkbarkeit infolge der Drehung der Zeigerachse auch um die Achse ihrer radialen Erstreckung drehbar ist und die Zeigerfahne mindestens zwei in ihrem Erscheinungsbild voneinander unterscheidbare Begrenzungsflächen aufweist. Die Lösung sieht demnach vor, daß die Begrenzungsflächen der Zeigerfahne zur Darstellung von mindestens zwei deutlich voneinander unterscheidbaren Signalzuständen genutzt werden. Entsprechend dem Drehwinkel der Zeigerfahne um die Achse ihrer radialen Erstreckung geht von den Begrenzungsflächen der Zeigerfahne somit eine Signalwirkung aus, so daß die Zeigerfahne zusätzlich zu ihrer herkömmlichen Anzeigefunktion als Melder nutzbar ist.

Die abhängigen Ansprüche zeigen Ausgestaltungen und Weiterbildungen der gefundenen Lösung. So kann die Anzeigevorrichtung derart ausgestaltet sein, daß die Drehung der Zeigerfahne um die Achse ihrer radialen Erstreckung von der Drehung der Zeigerachse unabhängig ist. Es besteht demnach keine Kopplung zwischen dem Drehwinkel der Zeigerachse und dem Drehwinkel der Zeigerfahne. Eine solche Ausgestaltung hat den Vorteil, daß die Funktion der Zeigerfahne als Melder unabhängig von der herkömmlichen Anzeigefunktion der Zeigerfahne ausgeführt werden kann.

Als Antrieb zum Drehen der Zeigerfahne um die Achse ihrer radialen Erstreckung eignen sich insbesondere permanentmagnetische oder elektromagnetische Stellmittel, weil sie kostengünstig zu realisieren sind. Dabei können die permanentmagnetischen Stellmittel beispielsweise aus einem an einer Welle der Zeigerfahne angeordneten zweipoligen Stellmagneten und einem um die Zeigerachse ringförmig ausgebildeten Permanentmagneten mit mindestens zwei unterschiedlichen Polaritätszonen bestehen. Elektromagnetische Stellmittel kann man aus einem an einer Welle der Zeigerfahne angeordneten zweipoligen Stellmagneten und einer um die Zeigerachse ringförmig ausgebildeten bestrombaren Stellspule ausbilden. Die Verwendung von permanentmagnetischen Stellmitteln ist dann eine einfach und kostengünstig zu realisierende Lösung, wenn die Funktion der Zeigerfahne als Melder in fester Abhängigkeit von einem bestimmten Drehwinkel der Zeigerachse erfolgen soll. Wenn die Funktion der Zeigerfahne als Melder unabhängig vom Drehwinkel der Zeigerachse steuerbar sein soll, sind elektromagnetische Stellmittel, bei denen der Stromfluß durch eine Stellspule im Sinne des Meldesignals steuerbar ist, das adäquate Lösungsmittel. Für die konstruktive Ausgestaltung ist es vorteilhaft, wenn die Welle der Zeigerfahne in der Zeigerachse selbst oder in deren mit ihr fest verbundenen Verlängerung drehbar gelagert ist. Die Welle der Zeigerfahne ist mit dem Körper der Zeigerfahne fest verbunden.

Um die Zeigerfahne zusätzlich zu ihrer herkömmlichen Anzeigefunktion als Melder zu nutzen, kann die Zeigerfahne entlang der Achse ihrer radialen Erstreckung mindestens zwei Begrenzungsflächen aufweisen, die sich in ihrer Farbgebung voneinander unterscheiden. Durch zwei sich signifikant unterscheidende Farben wie beispielsweise rot und grün werden zwei deutlich voneinander unterscheidbare Signalzustände bereitgestellt, die bei entsprechend fest vereinbarter Zuordnung zur Meldung in einfach zu interpretierender Weise signalisieren, ob beispielsweise die bestimmte Meldung vorliegt oder nicht. Dabei können die mindestens zwei Begrenzungsflächen der Zeigerfahne einen unterschiedlichen Farbauftrag aufweisen. Ein Farbauftrag läßt sich drucktechnisch oder durch eine entsprechende Lackierung einfach und kostengünstig realisieren, sofern der Werkstoff und die Oberflächenbeschaffenheit der Zeigerfahne für derartige Behandlungen geeignet sind. Eine Alternative zum Farbauftrag auf der Zeigerfahne besteht darin, die Zeigerfahne als einen Farbwandler auszubilden, bei dem die Begrenzungsflächen der Zeigerfahne mit einem Fluoreszenzdruck versehen sind, so daß die Begrenzungsflächen erst bei Anstrahlung mit UV-Licht einen zum unbestrahlten Zustand veränderten Farbeindruck erhalten. Sofern die Zeigerfahne als Lichtleiter ausgebildet ist, können die Begrenzungsflächen der Zeigerfahne auch derart beschaffen sein, daß in die Zeigerfahne eingekoppeltes Licht je nach Drehwinkel der Zeigerfahne um die Achse ihrer radialen Erstreckung einen unterschiedlichen optischen Eindruck hervorruft, so daß für einen Betrachter beispielsweise entweder die Grundfarbe des Körpers der Zeigerfahne bzw. die auf deren Begrenzungsflächen aufgetragene Farbe überwiegt oder die Farbe des in die Zeigerfahne eingekoppelten und an den Begrenzungsflächen der Zeigerfahne austretenden Lichtes.

Anhand von dreizehn Figuren soll die Erfindung nun noch näher erläutert werden. Dabei zeigen
- **Figur 1**: schematisch den prinzipiellen Aufbau einer gattungsgemäßen Anzeigevorrichtung,
- **Figur 2**: einen Längsschnitt eines Zeigers mit permanentmagnetischen Stellmitteln für die Zeigerfahne,
- **Figur 3**: eine Draufsicht eines Zeigers mit permanentmagnetischen Stellmitteln für die Zeigerfahne,
- **Figur 4**: einen Längsschnitt eines Zeigers mit elektromagnetischen Stellmitteln für die Zeigerfahne,
- **Figur 5**: eine Draufsicht eines Zeigers mit elektromagnetischen Stellmitteln für die Zeigerfahne,
- **Figur 6**: perspektivisch eine Zeigerfahne mit zwei Begrenzungsflächen,
- **Figur 7**: perspektivisch eine Zeigerfahne mit drei Begrenzungsflächen,
- **Figur 8A bis 8D**: eine Serie von Erscheinungsbildern der Zeigerfahne bei vier unterschiedlichen Drehwinkeln der Zeigerachse,
- **Figur 9**: eine Draufsicht eines Zeigers mit einem Stellmagneten und einem Hilfspol,
- **Figur 10**: einen Längsschnitt eines Zeigers mit einem Stellmagneten und einem stiftartigen Hilfspol,
- **Figur 11**: einen Längsschnitt eines Zeigers mit einem Stellmagneten und einem als Clip ausgebildeten Hilfspol,
- **Figur 12**: einen als Clip ausgebildeten Hilfspols als Einzelteil und
- **Figur 13**: zwei Detailansichten des stiftartigen Hilfspols.

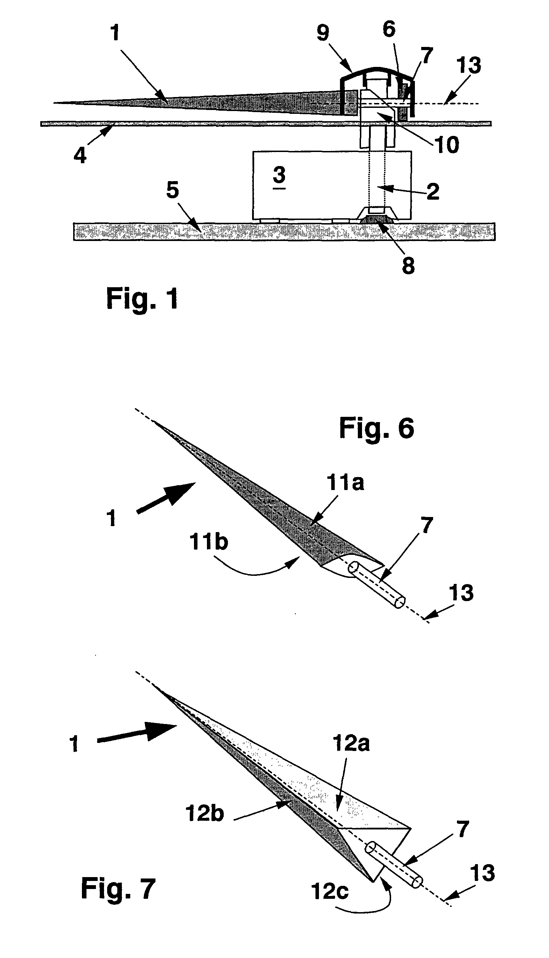

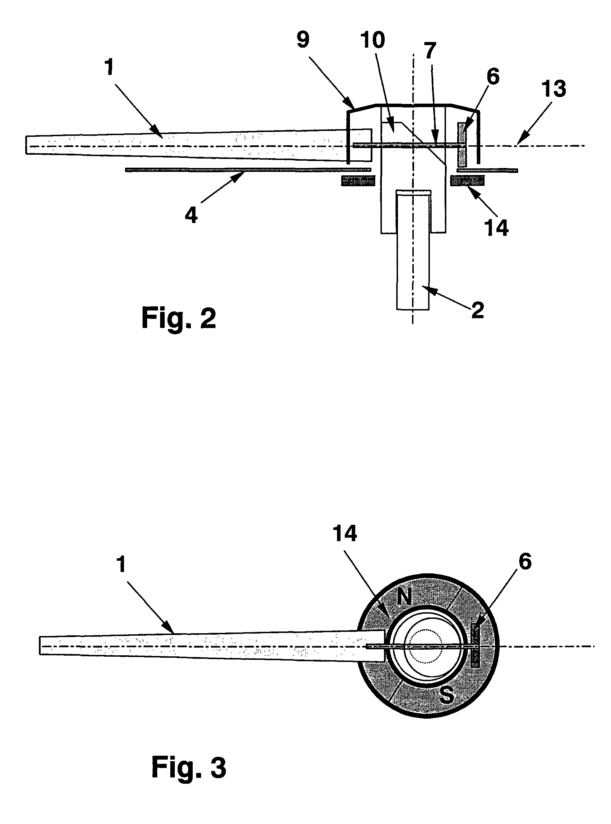

Gemäß der **Figur 1** besitzt eine gattungsgemäße Anzeigevorrichtung einen Zeiger, der aus einer Zeigerfahne 1 und einer Zeigerachse 2 besteht. Die Zeigerfahne 1 ist mit der Zeigerachse 2 derart verbunden, daß eine Drehung der Zeigerachse 2 die Zeigerfahne 1 über einem Zifferblatt 4 oder einer Skala auslenkt, wodurch die Zeigerfahne 1 ihre herkömmliche Anzeigefunktion erfüllt. Die Zeigerachse 2 kann zum Beispiel von einem Schrittmotor 3 oder einem anderen geeigneten Antrieb angetrieben werden. Der Schrittmotor 3 und dessen elektronische Ansteuerung ist in der Regel auf einer Leiterplatte 5 montiert. Für kraftfahrtechnische Anwendungen ist die Zeigerachse 2 zumeist Licht leitend ausgebildet und eine Leuchtdiode 8 oder ein anderes Leuchtmittel ist derart auf der Leiterplatte 5 plaziert, daß von diesem Leuchtmittel ausgesandtes Licht in die Zeigerachse 2 eingekoppelt wird. Durch einen an der Zeigerachse 2 angebrachten Prismenkopf 10 wird dann dieses Licht in die Zeigerfahne 1 geleitet, um die Zeigerfahne 1 zu beleuchten. Eine Zeigerkappe 9 deckt frontseitig die Zeigerachse 2 ab. Die Zeigerfahne 1 weist an ihrem einen Ende eine fest mit der Zeigerfahne 1 verbundene, vorzugsweise aus Stahl gefertigte Welle 7 auf, welche in der Zeigerachse 2, vorzugsweise im Prismenkopf 10, drehbar gelagert ist. Überdies ist an der Welle 7 erfindungsgemäß ein mindestens zweipoliger Stellmagnet 6 angebracht, um mit dessen Hilfe in Verbindung mit den in den Figuren 2 bis 5 aufgezeigten Mitteln eine Drehbewegung der Zeigerfahne 1 um die Achse 13 ihrer radialen Erstreckung zu bewirken sowie das Halten der Zeigerfahne 1 in einer stabilen Position gegenüber dem als Bezugsebene dienenden Zifferblatt 4. Der Stellmagnet 6 kann beispielsweise aus einem ringförmigen bzw. scheibenförmigen kunststoffgebundenen Permanentmagneten bestehen, in dem an geeigneten Stellen magnetische Pole eingeprägt sind.

Die **Figuren 2 und 3** zeigen Schnittdarstellungen eines Zeigers mit permanentmagnetischen Stellmitteln für die Zeigerfahne 1. Ergänzend zur Figur 1 ist ein die Zeigerachse 2 ringförmig umschließender Permanentmagnet 14 dargestellt, der mindestens zwei unterschiedlich magnetisierte Segmente N und S aufweist. Dargestellt sind ein Segment mit einer Magnetisierung als magnetischer Nordpol N und ein Segment mit einer Magnetisierung als magnetischer Südpol S. Wenn nun die Zeigerfahne 1 mit dem an der Welle 7 angebrachten Stellmagneten 6 - angetrieben von der Zeigerachse 2 - über den ringförmigen Permanentmagneten 14 hinweg bewegt wird, schwenkt die Zeigerfahne 1 infolge der zwischen dem Stellmagneten 6 und dem Permanentmagneten 14 bestehenden magnetischen Kräfte um 180° um die Achse 13 ihrer radialen Erstreckung, sobald der Stellmagnet 6 vom einen Segmentbereich N kommend zum anderen Segmentbereich S hinüber bewegt wird. Solange sich der Stellmagnet 6 in Wirkverbindung mit dem einen oder dem anderen Segmentbereich befindet, verharrt die Zeigerfahne 1 aufgrund der magnetischen Anziehungskräfte in einem bestimmten definierten Drehwinkel bezüglich der Achse 13 ihrer radialen Erstreckung. Auf diese Weise kann die Zeigerfahne 1 an derjenigen Drehwinkelposition der Zeigerachse 2, die durch die Grenzflächen der beiden Segmentbereiche N und S definiert ist, die Funktion eines Melders ausüben, da die Zeigerfahne 1 zwei in ihrem Erscheinungsbild voneinander unterscheidbare Begrenzungsflächen aufweist. Die Veränderung des Erscheinungsbildes kann dadurch hervorgerufen werden, daß die Oberseite und die Unterseite der Zeigerfahne 1 farblich unterschiedlich gestaltet sind. Diese Ausgestaltung der Erfindung ist beispielsweise in Verbindung mit als Drehzahlmesser ausgebildeten Anzeigevorrichtungen interessant, wenn ab einer bestimmten Drehzahlanzeige Gefahr oder das Verlassen eines zulässigen Betriebsbereiches signalisiert werden soll.

Alternativ zu den hier beschriebenen permanentmagnetischen Stellmitteln für die Zeigerfahne 1 sind auch rein mechanische Lösungen realisierbar, wenn es allein darum geht, die Zeigerfahne 1 bei einem bestimmten Drehwinkel der Zeigerachse 2 um die Achse 13 ihrer radialen Erstreckung zu drehen. Derartige mechanische Lösungen können beispielsweise durch eine Zahnradanordnung und Mitnehmerkonstruktionen ausgebildet sein, die ähnlich einem Rollenzählwerk funktionieren.

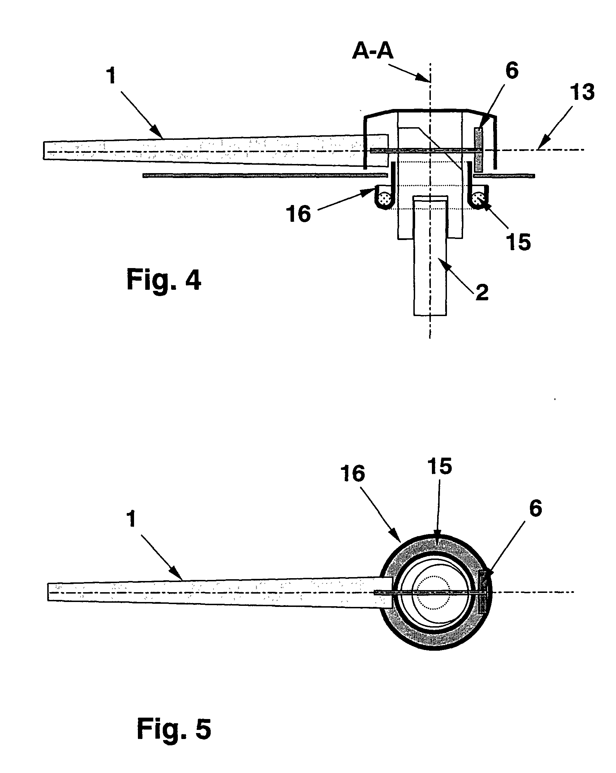

In den **Figuren 4 und 5** sind Schnittdarstellungen eines Zeigers mit elektromagnetischen Stellmitteln für die Zeigerfahne 1 dargestellt. Dabei besteht der Zeiger im wesentlichen aus den gleichen Bauelementen wie bei dem Ausführungsbeispiel gemäß den Figuren 2 und 3. Ein Unterschied besteht allein darin, daß unterhalb des Zifferblattes 4 statt des Permanentmagneten 14 eine die Zeigerachse 2 ringförmig umschließende bestrombare Stellspule 15 vorgesehen ist, wobei die Stellspule 15 in einem Polführungsring 16 gelagert ist, der bei Bestromung der Stellspule 15 das durch die Bestromung erzeugte Magnetfeld in Richtung des zweipoligen Stellmagnaten 6 leitet. Die Stellspule 15 ist mit einer elektronischen Steuerschaltung verbunden, die in den Figuren 4 und 5 jedoch nicht dargestellt ist. Mittels dieser Steuerschaltung kann auf das Magnetfeld zwischen der Stellspule 15 und dem Stellmagnaten 6 Einfluß genommen werden, so daß die Zeigerfahne 1 durch die am Stellmagnaten 6 wirkenden magnetischen Kräfte um die Achse 13 ihrer radialen Erstreckung gedreht und in einer bestimmten Position gehalten werden kann. Diese Drehbewegung ist unabhängig von der Drehung der Zeigerfahne 1 um die Zeigerachse 2.

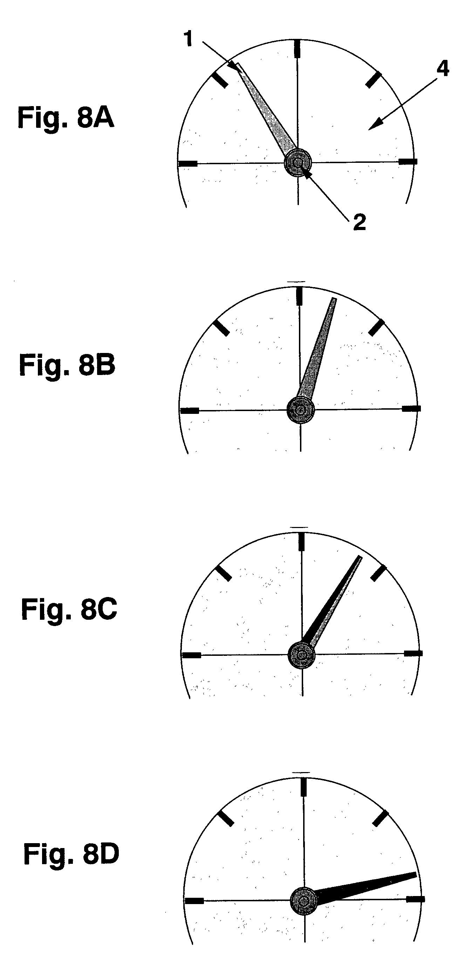

In den **Figur 6 und 7** sind Ausführungsbeispiele für eine Zeigerfahne 1 dargestellt. So zeigt Figur 6 perspektivisch eine Zeigerfahne 1 mit zwei sich gegenüber liegenden Begrenzungsflächen 11a und 11b. Die Figur 7 zeigt perspektivisch eine Zeigerfahne 1 mit drei Begrenzungsflächen 12a, 12b und 12c, die in diesem Beispiel derart zueinander angeordnet sind, daß der Querschnitt des Körpers der Zeigerfahne 1 ein gleichseitiges Dreieck ergibt. Durch Drehung der Zeigerfahne 1 um die Achse 13 ihrer radialen Erstreckung wird dem Betrachter jeweils mindestens eine der Begrenzungsflächen 11a, 11b bzw. 12a, 12b und 12c zugewandt. Wenn die Begrenzungsflächen 11a, 11b bzw. 12a, 12b und 12c beispielsweise durch Farbdrucke in ihrem Erscheinungsbild voneinander verschieden gestaltet sind, können von den Begrenzungsflächen 11 a, 11b bzw. 12a, 12b und 12c der Zeigerfahne 1 je nach dem Drehwinkel um die Achse 13 unterschiedliche Signalwirkungen ausgehen.

Die **Figuren 8A, 8B, 8C und 8D** zeigen Erscheinungsbilder der Zeigerfahne 1 bei vier unterschiedlichen Drehwinkeln der Zeigerachse 2. Während sich die Zeigerfahne 1 im Uhrzeigersinn über das Zifferblatt 4 hinweg bewegt, wobei die Zeigerfahne 1 von der Zeigerachse 2 angetrieben wird, ändert die Zeigerfahne 1 bei bestimmten Winkelstellungen der Zeigerachse 2 ihr Erscheinungsbild bezüglich der einem Betrachter zugewandten Begrenzungsfläche, wobei in diesem Beispiel die Zeigerfahne 1 entsprechend der Figur 7 mit drei Begrenzungsflächen ausgebildet ist. Dadurch kann dem Betrachter mit der Zeigerfahne 1 zusätzlich zu der herkömmlichen Anzeigefunktion der Zeigerfahne 1 zuverlässig und mit guter Signalwirkung eine weitere Information gemeldet werden. Die Ausbildung der Zeigerfahne 1 mit drei Begrenzungsflächen hat den Vorteil, daß dem Betrachter auch durch die Übergangsbereiche, in denen entsprechend der Darstellung in der Figur 8C zwei Begrenzungsfläche gleichzeitig sichtbar sind, eine definierte Information vermittelt werden kann, beispielsweise daß ein Meßparameter außerhalb eines zulässigen Betriebsbereiches zu laufen droht. Zusammenfassend zeigen diese Figuren, wie eine Zeigerfahne 1 in Abhängigkeit von ihrer Zeigerposition in guter Wahrnehmbarkeitsqualität eine Zusatzinformation an einen Betrachter vermittelt.

Im nun folgenden Teil der Erfindungsbeschreibung wird noch eine Weiterentwicklung der bisher erörterten Lösung beschrieben. Ausgangspunkt dieser Weiterbildung ist eine Anzeigevorrichtung mit einem Zeiger,
a) wobei der Zeiger aus einer drehbaren Zeigerachse 2 und einer an der Zeigerachse 2 radial angeordneten Zeigerfahne 1 besteht,
b) wobei die Zeigerfahne 1 entsprechend einer Drehung der Zeigerachse 2 ausschwenkt,
c) wobei die Zeigerfahne 1 zusätzlich zu ihrer Schwenkbarkeit infolge der Drehung der Zeigerachse 2 auch um die Achse 13 ihrer radialen Erstreckung drehbar ist und die Zeigerfahne 1 mindestens zwei in ihrem Erscheinungsbild voneinander unterscheidbare Begrenzungsflächen 11a, 11b bzw. 12a, 12b und 12c aufweist,
d) wobei zum Drehen der Zeigerfahne 1 um die Achse 13 ihrer radialen Erstreckung elektromagnetische Stellmittel vorgesehen sind
e) und wobei die elektromagnetischen Stellmittel aus einem an einer Welle 7 der Zeigerfahne 1 angeordneten mindestens zweipoligen dauermagnetischen Stellmagneten 6 und einer um die Zeigerachse 2 ringförmig ausgebildeten bestrombaren Stellspule 15 bestehen.

Wie zuvor schon erläutert, wird die Zeigerfahne um die Achse ihrer radialen Erstreckung mittels einer in der Zeigerachse gelagerten Welle dadurch gedreht, daß sich durch eine bedarfsgerecht steuerbare Bestromung einer um die Zeigerachse ringförmig ausgebildeten Stellspule ein magnetisches Feld zwischen der Stellspule und einem an der Zeigerfahne befestigten Stellmagneten ausbildet und aufgrund von magnetischen Anziehungs- bzw. Abstoßungskräften die Begrenzungsflächen der Zeigerfahne eine definierte Position einnehmen, so daß einem Betrachter der Anzeigevorrichtung eine ganz bestimmte dieser Begrenzungsflächen zugewandt wird, wodurch dem Betrachter durch das dieser Begrenzungsfläche zugeordnete Erscheinungsbild der Zeigerfahne eine bestimmte Meldung vermittelt wird.

Nun ist das zur Drehung der Zeigerfahne erforderliche magnetische Feld bei präziser Ausführung der Stellspule und des Polführungsrings, in dem die Stellspule gelagert ist, weitgehend symmetrisch. In der Folge ist zur Drehung der Zeigerfahne ein relativ starkes magnetisches Feld erforderlich, um auf den Stellmagneten ein ausreichend großes Drehmoment einwirken zu lassen, damit sich dieser samt der mit ihm über die Welle starr verbundenen Zeigerfahne zu drehen beginnt. Denn mit dem aus dem magnetischen Feld resultierenden Drehmoment muß auch die unvermeidbare Lagerreibung der Welle in der Zeigerachse überwunden werden. An diesem Sachverhalt ändert sich auch kaum etwas, wenn man davon ausgeht, daß in der Praxis infolge von Fertigungs- und Anordnungstoleranzen das magnetische Feld zwischen der Stellspule und dem Stellmagneten geringfügig verzerrt sein mag.

Um das aus dem magnetischen Feld zwischen der Stellspule und dem Stellmagneten zu erzeugende Drehmoment, welches zur Drehung der Zeigerfahne erforderlich ist, zu erhöhen, wird in dieser Weiterbildung nun vorgeschlagen, daß mindestens ein ferromagnetischer Hilfspol vorgesehen wird, durch den das sich zwischen der Stellspule und dem Stellmagneten ausbildende magnetische Feld derart unsymmetrisch verformt wird, daß bereits verhältnismäßig geringe Kräfte aus dem magnetischen Feld den in einer bestimmten Gleichgewichtsposition verharrenden Stellmagneten in eine Drehbewegung versetzen können. Diese durch den ferromagnetischen Hilfspol hervorgerufene Feldverzerrung hilft demnach, große Impulsströme oder Stromüberhöhungen in der Stellspule zu vermeiden, um das zur Drehung der Zeigerfahne erforderliche Anlaufdrehmoment zu erzeugen. Dabei wird der Hilfspol derart im Verhältnis zum Stellmagneten angeordnet, daß sich das permanentmagnetische Feld des Stellmagneten mit ausreichender Intensität auf den Hilfspol auswirken kann.

Ein zweipoliger Stellmagnet nimmt zur Stellspule zwei bestimmte Winkelpositionen ein, die hier beispielhaft mit ϕ1 = 0° und ϕ2 = 180° bezeichnet werden. Durch einen Stromstoß in der Stellspule kann ein Drehmoment auf die Welle der Zeigerfahne ausgeübt werden, so daß sich diese zu drehen beginnt, bis sich wieder zwischen den aus dem magnetischen Feld resultierenden Anziehungs- und Abstoßungskräften ein Gleichgewicht ausbildet. Das Feld der dauermagnetischen Pole des Stellmagneten richtet sich vorrangig zum Polführungsring hin aus, was dazu führt, daß der Stellmagnet nach jeder halben Umdrehung in eine stabile Halteposition einschwenkt. Die Bestromung der Stellspule kann demnach ausgeschaltet werden, sobald für die Welle der Zeigerfahne das Anlaufdrehmoment aufgebracht ist. Ein in räumlicher Nähe zum Stellmagneten angeordneter Hilfspol reduziert nun durch die von ihm bewirkte Feldverzerrung den zur Erzeugung des Anlaufdrehmoments erforderlichen Strom. Diese Anordnung für eine gattungsgemäße Anzeigevorrichtung weist somit eine günstige elektrische Energiebilanz auf.

Mit in der Stellspule fließenden Dauerströmen unterschiedlicher Stärke lassen sich unter Einbeziehung des vom Hilfspol beeinflußten magnetischen Feldes auch verschiedene Drehwinkel für die Zeigerfahne einstellen. Beispielsweise mag die Zeigerfahne bei unbestromter Stellspule den Drehwinkel α = 0° einnehmen. Bei einer Stromstärke +1 mag sich dann die Zeigerfahne ― ausgehend von ihrer Ruhelage mit dem Drehwinkel α = 0° - um den Drehwinkel β = +120° drehen und, wenn durch Änderung der Stromrichtung die Stromstärke -I eingestellt wird, um den Drehwinkel y = -120°. Auf diese Weise kann eine mit drei Begrenzungsflächen ausgebildete Zeigerfahne in 120° - Schritten gedreht werden.

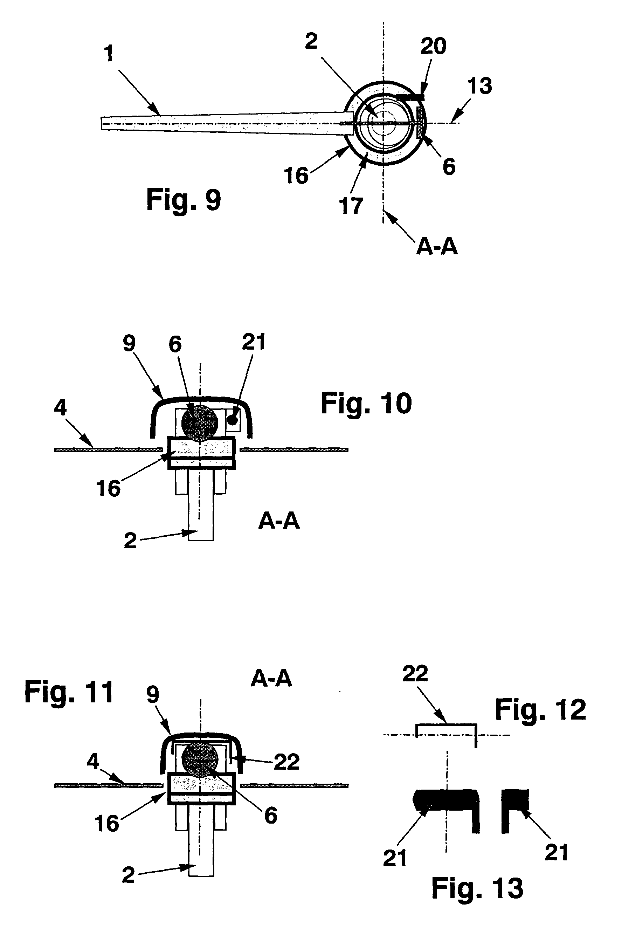

Aufbauend auf den bereits erörterten Figuren 1, 4 und 5 soll die vorgeschlagene Weiterbildung nun im wesentlichen noch anhand der Figuren 9 bis 13 näher erläutert werden.

In der **Figur 9** wurde der in der Figur 5 gezeigten Anordnung ein Hilfspol 20 hinzugefügt. Der Hilfspol 20 besteht aus einem ferromagnetischen Werkstoff und hat damit eine relative Permeabilität µᵣ > 1. Stellmagnet 6 und Hilfspol 20 sind derart zueinander angeordnet, daß sich das dauermagnetische Feld des Stellmagneten 6 mit ausreichender magnetischer Feldstärke auf den ferromagnetischen Hilfspol 20 erstrecken kann.

Die **Figur 10** zeigt in einer Schnittebene A-A einen Zeiger mit einem Stellmagneten 6 und einem als Stift 21 oder Stab ausgebildeten Hilfspol 20, wobei der Hilfspol 20 derart positioniert ist, daß er vom Stellmagneten 6 und vom Polführungsring 16 in etwa gleich weit beabstandet ist. Der Abstand liegt dabei etwa zwischen dem einfachen bis doppelten Maß des Durchmessers des Stiftes 21. Die Lage der Schnittebene A-A kann auch in Verbindung mit den zuvor erläuterten Figuren 4 und 9 ersehen werden.

Die **Figur 11** zeigt in der Schnittebene A-A einen Zeiger mit einem Stellmagneten 6 und einem als Clip 22 ausgebildeten Hilfspol 20. Dieser Clip 22 kann als ein Stanz-Biegeteil aus einem ferromagnetischen Werkstoff gefertigt und in der Zeigerkappe 9 oder über dem Prismenkopf 10 verrastet oder dort verklebt werden. In der **Figur 12** ist dieser Clip 22 als Einzelteil als ein Bügel aus einem ferromagnetischen Werkstoff dargestellt. Eine weitere Ausbildung des Hilfspols 20 kann auch darin bestehen, daß die Zeigerkappe 9 mit Metallfasern aus einem ferromagnetischen Werkstoff dotiert und gerade zum Stellmagneten 6 hin entsprechend ausgeformt wird, so daß der Hilfspol 20 zu einem integralen Bestandteil der Zeigerkappe 9 wird. So könnte die Zeigerkappe 9 auch als ein ferromagnetisches Tiefziehteil mit einer passenden Geometrie ausgebildet sein. Die **Figur 13** zeigt eine Längs- und eine Rückansicht eines als Stift 21 oder Stab ausgebildeten Hilfspols 20.

## Patentansprüche

1. Anzeigevorrichtung mit einem Zeiger, wobei der Zeiger aus einer drehbaren Zeigerachse (2) und einer an der Zeigerachse (2) radial angeordneten Zeigerfahne (1) besteht, wobei die Zeigerfahne (1) entsprechend einer Drehung der Zeigerachse (2) ausschwenkt, **dadurch gekennzeichnet,** daß die Zeigerfahne (1) zusätzlich zu ihrer Schwenkbarkeit infolge der Drehung der Zeigerachse (2) auch um die Achse (13) ihrer radialen Erstreckung drehbar ist und die Zeigerfahne (1) mindestens zwei in ihrem Erscheinungsbild voneinander unterscheidbare Begrenzungsflächen (11a, 11b bzw. 12a, 12b und 12c) aufweist.

2. Anzeigevorrichtung nach Anspruch 1, **dadurch gekennzeichnet,** daß die Drehung der Zeigerfahne (1) um die Achse (13) ihrer radialen Erstreckung von der Drehung der Zeigerachse (2) unabhängig ist.

3. Anzeigevorrichtung nach einem der vorangegangenen Ansprüche, **dadurch gekennzeichnet,** daß zum Drehen der Zeigerfahne (1) um die Achse (13) ihrer radialen Erstreckung permanentmagnetische oder elektromagnetische Stellmittel vorgesehen sind.

4. Anzeigevorrichtung nach Anspruch 3, **dadurch gekennzeichnet,** daß die permanentmagnetischen Stellmittel aus einem an einer Welle (7) der Zeigerfahne (1) angeordneten zweipoligen Stellmagneten (6) und einem um die Zeigerachse (2) ringförmig ausgebildeten Permanentmagneten (14) mit mindestens zwei unterschiedlichen Polaritätszonen (N, S) bestehen.

5. Anzeigevorrichtung nach Anspruch 3, **dadurch gekennzeichnet, daß** die elektromagnetischen Stellmittel aus einem an der Welle (7) der Zeigerfahne (1) angeordneten zweipoligen Stellmagneten (6) und einer um die Zeigerachse (2) ringförmig ausgebildeten bestrombaren Stellspule (15) bestehen.

6. Anzeigevorrichtung nach einem der vorangegangenen Ansprüche, **dadurch gekennzeichnet, daß** die Welle (7) der Zeigerfahne (1) in der Zeigerachse (2) selbst oder in deren mit ihr fest verbundenen Verlängerung drehbar gelagert ist.

7. Anzeigevorrichtung nach einem der vorangegangenen Ansprüche, **dadurch gekennzeichnet,** daß die Zeigerfahne (1) entlang der Achse (13) ihrer radialen Erstreckung mindestens zwei Begrenzungsflächen (11a, 11b) aufweist, die sich in ihrer Farbgebung voneinander unterscheiden.

8. Anzeigevorrichtung nach Anspruch 7, **dadurch gekennzeichnet,** daß die mindestens zwei Begrenzungsflächen (11a, 11b) der Zeigerfahne (1) einen unterschiedlichen Farbauftrag aufweisen.

9. Anzeigevorrichtung nach Anspruch 7, **dadurch gekennzeichnet, daß** die Zeigerfahne (1) als ein Farbwandler ausgebildet ist, bei dem die Begrenzungsflächen (11a, 11b bzw. 12a, 12b und 12c) der Zeigerfahne (1) mit einem Fluoreszenzdruck versehen sind, so daß die Begrenzungsflächen (11a, 11b bzw. 12a, 12b und 12c) erst bei Anstrahlung mit UV-Licht einen zu ihrem unbestrahlten Zustand veränderten Farbeindruck erhalten.

10. Anzeigevorrichtung nach Anspruch 5, **dadurch gekennzeichnet,** daß mindestens ein ferromagnetischer Hilfspol (20) vorgesehen ist, durch den das sich zwischen der Stellspule (15) und dem Stellmagneten (6) ausbildende magnetische Feld derart unsymmetrisch verformt wird, daß bereits verhältnismäßig geringe Kräfte aus dem magnetischen Feld den in einer bestimmten Gleichgewichtsposition verharrenden Stellmagneten (6) in eine Drehbewegung versetzen können.

11. Anzeigevorrichtung nach einem der vorangegangenen Ansprüche, **dadurch gekennzeichnet,** daß der Hilfspol (20) als Stift (21) oder Stab ausgebildet ist.

12. Anzeigevorrichtung nach einem der vorangegangenen Ansprüche, **dadurch gekennzeichnet,** daß der Hilfspol (20) derart positioniert ist, daß er vom Stellmagneten (6) und vom Polführungsring (16) in etwa gleich weit beabstandet ist, wobei der Abstand etwa das einfache bis doppelte Maß des Durchmessers des Stiftes (21) beträgt.

13. Anzeigevorrichtung nach einem der vorangegangenen Ansprüche, **dadurch gekennzeichnet,** daß der Hilfspol (20) als Clip (22) oder Bügel ausgebildet ist.

14. Anzeigevorrichtung nach einem der vorangegangenen Ansprüche, **dadurch gekennzeichnet,** daß der Clip (22) oder Bügel als ein Stanz-Biegeteil gefertigt und in der Zeigerkappe (9) oder über dem Prismenkopf (10) verrastet oder dort verklebt ist.

15. Anzeigevorrichtung nach einem der vorangegangenen Ansprüche, **dadurch gekennzeichnet,** daß der Hilfspol (20) ein integraler Bestandteil der Zeigerkappe (9) ist.
